# EUROPÄISCHE PATENTSCHRIFT

(11) **EP 2 145 466 B1**
(45) Veröffentlichungstag und Bekanntmachung des Hinweises auf die Patenterteilung: **19.07.2017**
(21) Anmeldenummer: 08734827.2
(22) Anmeldetag: 28.03.2008
(51) Int. Cl.: H04M 15/00, H04M 15/02

(54) **VERFAHREN ZUR NETZGESTEUERTEN VOLUMEN- UND/ODER ZEITBEGRENZUNG VON GPRS/UMTS (2G/3G) BASIERTEN DIENSTEN**
METHOD FOR NETWORK-CONTROLLED VOLUME AND/OR TIME LIMITATION OF SERVICES BASED ON GPRS/UMTS (2G/3G)
PROCÉDÉ POUR LA LIMITATION EN VOLUME ET/OU EN TEMPS COMMANDÉE PAR LE RÉSEAU DE SERVICES BASÉS SUR LES TECHNOLOGIES GPRS/UMTS (2G/3G)

(30) Priorität: 12.04.2007 DE 102007017181
(43) Veröffentlichungstag der Anmeldung: 20.01.2010
(73) Patentinhaber: T-Mobile International AG, 53227 Bonn (DE)
(72) Erfinder: BLICKER, Stefan, 53343 Wachtberg (DE)
(74) Vertreter: Riebling, Peter
(86) Internationale Anmeldenummer: PCT/EP2008/002451
(87) Internationale Veröffentlichungsnummer: WO 2008/125196

(56) Entgegenhaltungen:
- EP-A- 1 086 549
- EP-A- 1 496 712
- WO-A-00/04702
- DE-A1- 19 944 906
- US-A1- 2007 136 195

## Beschreibung

Die Erfindung betrifft ein Verfahren zur netzgesteuerten Volumen- und/oder Zeitbegrenzung von GPRS (General Packet Radio Service) beziehungsweise UMTS (Universal Mobile Telecommunication System) [2G/3G (Second Generation/Third Generation)] basierten Diensten nach dem Oberbegriff des Patentanspruches 1.

Derzeit weisen zellulare Mobilfunknetze mit Bezug auf die Datendienste keine reale Kostenkontrolle von übermittelten Daten für einen spezifischen GPRS (General Packet Radio Service) beziehungsweise UMTS (Universal Mobile Telecommunication System) Kontext und APN (Access Point Name) für den Mobilfunkkunden auf.

Derzeitige Mobilfunknetze, welche nach dem GSM-Standard ausgeführt werden, unterstützen Datendienste wie den Paketdatendienst GPRS (General Packet Radio Service) gemäß der bekannten ETSI GSM-Empfehlung 03.60 oder der 3 GPP Spezifikation 23.060.

Auch das im Aufbau befindliche UMTS Netz unterstützt entsprechende Datendienste.

Eine Übermittlung von Daten im Mobilfunknetz findet hierbei nicht verbindungsorientiert, sondern in Form von Paketdaten statt.
Diese Art der Datenübertragung nutzt die gegebenen Übertragungsressourcen im Mobilfunknetz besser aus.

Um Paketdaten zu empfangen oder zu senden, ist der Zugang zu einem Paketdatennetz erforderlich.

So ist es möglich, mit einem Mobilkommunikationsendgerät, wie zum Beispiel einem Mobiltelefon, eine Verbindung zu einem Paketdatennetz herzustellen.

Beispielsweise geht die Architektur für den Paketdatendienst GPRS davon aus, dass das vom mobilen Teilnehmer benutzte Kommunikationsendgerät - die Mobilstation - an ihrem jeweiligen Aufenthaltsort von einem GPRS Dienste-Netzknoten (SGSN: Serving GPRS Support Node) bedient wird.

Zu diesem Zweck werden Zugangsnetzknoten (GGSN: Gateway GPRS Support Nodes) bereitgestellt, die jeweils den Zugang zu dem Paketdatennetz - z.B. Internet - realisieren und ein bestimmtes Paketdatenprotokoll - z.B. Internet Protokoll - unterstützen.

Um eine Verbindung zum Paketdatendienst aufzubauen, die die Übertragung von Datenpaketen vom Mobilfunknetz an das Internet und umgekehrt ermöglicht, ist zunächst eine Anmeldung des jeweils empfangenden Teilnehmers durchzuführen.

Dieses geschieht mit der so genannten "PDP Context Activation" Prozedur. Hierbei wird ein so genannter Kontext aktiviert, d.h. ein Pfad durch das Telekommunikationsnetz, also etwa ein GPRS-Netz.

Dieser Pfad wird dem Telekommunikationsgerät, dem SGSN und dem GGSN mitgeteilt. Dieses stellt die Voraussetzung für die Datenübertragung dar.
Die Aktivierung des PDP Context wird entweder durch einen der Teilnehmer bzw. durch dessen Kommunikationsendgerät veranlasst, oder das Kommunikationsnetz veranlasst eines der Teilnehmergeräte jeweils dazu, den PDP Context mittels einer Nachricht "Activate PDP Context Request" anzufragen.

Nach Verbindungsaufbau zwischen dem SGSN und dem Endgerät des Teilnehmers überprüft der SGSN die Rechte des Kunden (Subscription), wonach dann eine Verbindung zum GGSN aufgebaut wird, der, wie oben beschrieben, als Schnittstelle zu einem externen Netzwerk, beispielsweise dem Internet, dient.

Hierfür sendet der Knoten SGSN an den Knoten GGSN die Nachricht "Create PDP Context Request". In dieser Nachricht ist der tatsächlich bestätigte QoS (QoS negotiated) enthalten, der dem vom Teilnehmer angefragten (QoS requested) entsprechen oder von diesem abweichen kann.

Anstelle einer Rufnummer, wie es bei einer leitungsvermittelten Verbindung der Fall ist, wird in der "Activate PDP Context"-Nachricht ein Name eines Zugangspunktes (APN: Access Point Name) übermittelt. Der APN wird dann in der "Create PDP context" an den GGSN gesendet.

Der APN ist ein logischer Name, der ein externes Paketdatennetz und/oder einen Dienst identifiziert, mit dem der Teilnehmer verbunden werden will. Neben dem APN enthält die "Activate PDP Context" Nachricht weitere Parameter, wie QoS Parameter, Routing-Parameter, Art des Datendienstes, und dergleichen mehr.

Probleme können entstehen, wenn der Teilnehmer den APN für den gewünschten Dienst nicht genau kennt oder sich bei der Eingabe des APN vertippt hat. Dann wird der gewünschte Dienst vom Telekommunikationsnetz nicht erkannt und kann nicht aktiviert werden.
Der Teilnehmer muss dann erst den genauen APN für den gewünschten Dienst ermitteln.

Hierdurch ist eine Kontrolle beziehungsweise Steuerung der Gebühren durch die Telekommunikationsteilnehmer derzeit lediglich auf dem jeweiligen Endgerät möglich, wobei das zu übertragende Datenvolumen oder die Übertragungszeit der Daten begrenzt wird, um einen nicht gewollten Anstieg der Kosten zu verhindern.

Wie das jeweilige Mobilfunkendgerät reagiert, ist von dem jeweiligen Netzbetreiber nicht kontrollierbar beziehungsweise steuerbar.

Ein aus Stand der Technik bekanntes System zur Anwendung des Verfahrens zur Vergebührung von empfangenen oder übermittelten, paketorientierten Datendiensten in einem Telekommunikationsnetz ist mit der Druckschrift DE 699 602 T2 offenbart.

Diese vorbenannte Druckschrift offenbart ein System, welches die Anzahl von empfangenen beziehungsweise übermittelten Datenpaketen in einer offenen beziehungsweise aktiven Telekommunikationsverbindung innerhalb einer festgelegten Zeitperiode ermittelt und diese über eine entsprechende Berechnungsmethode gegenüber einem Telekommunikationskunden abrechnet. Dieses System zur Ausführung des vorbeschriebenen Verfahrens weist jedoch den wesentlichen Nachteil auf, dass die hier zu übertragenden Datenpakete vom Nutzer nicht direkt kontrollierbar sowie steuerbar sind, um eine Kostenkontrolle über die abzurechnenden Datendienste einem Telekommunikationsteilnehmer zur Verfügung zu stellen.

Es ist jedoch im Zuge einer realen Kostenkontrolle extrem wichtig, derartige Datenvolumina, welche von oder in einem Mobilfunknetz übertragen werden direkt im Mobilfunknetz zu kontrollieren, beziehungsweise eine Kostenkontrolle mittels einer Volumen- beziehungsweise Zeitbegrenzung vor zu sehen.

WO 00/04702 A1 offenbart ein Verfahren zur netzgesteuerten Kostenkontrolle von unterschiedlichen, in Anspruch genommen Telekommunikationsdiensten innerhalb einer festgelegten Zeitperiode.

DE 199 44 906 B4 offenbart ein Verfahren zur Überwachung einer bestimmten Zeit- und Volumenbegrenzung von übermittelten Daten während einer Telekommunikationsverbindung.

Daher kann die Aufgabe der Erfindung darin gesehen werden, ein Verfahren zur netzgesteuerten Volumen- /Zeitbegrenzung von GPRS/UMTS basierten Diensten derart weiterzubilden, dass ein Nutzer eine direkte und komfortablere Kontrolle und Steuerung der Kosten für derartige Paketdatendienste ausführen kann.

Diese Aufgabe wird erfindungsgemäß durch ein Verfahren gemäß dem unabhängigen Anspruch 1 gelöst.

Bevorzugte Ausgestaltungen und andere vorteilhafte Merkmale der Erfindung sind in den abhängigen Ansprüchen angegeben.

Wesentliches Merkmal der Erfindung ist, dass das Verfahren eine netzgesteuerte Volumen- und/oder Zeitbegrenzung von Datenpaketen innerhalb von GPRS/UMTS basierten Diensten aufweist, welche für einen Nutzer von Telekommunikationsverbindungen eine Kostenkontrolle der in Anspruch genommenen Telekommunikationsdiensten ausbildet.

Demnach ist ein Nutzer aufgrund des erfindungsgemäßen Verfahrens durchaus in der Lage seine maximal verfügbare Zeit und/oder das maximal zur Verfügung stehende Volumen zur Übertragung von Datenpaketen auf der Basis der ihm bekannten Nutzungstarife zu berechnen, da dieser in der Regel Kenntnis darüber hat, zu welchem Tarif er die Datenpakete empfangen bzw. übermitteln kann.

Erfindungsgemäß ist vorgesehen, dass ein Kunde über sein Endgerät das für den PDP Kontext maximal zu verbrauchende Volumen und/oder Zeitfenster eingibt.

Mit der Eingabe eines Höchst- bzw. Maximalwertes für ein Datenvolumen beziehungsweise für einen Zeitrahmen ist der Kunde in der Lage eine entsprechende Signalisierung gemäß den nachfolgenden Optionen auszuwählen.

Soll der Nutzer nach Verbrauch des Volumens bzw. nach Verbrauch des vorgegebenen Zeitrahmens benachrichtigt werden, ist dies zum Beispiel über eine SMS (Short Message Service) durchführbar.
Darüber hinaus ist ebenfalls ein sofortiger Abbruch des momentanen PDP Kontext als auch sekundärer Kontexte ausführbar.

Hierbei werden die Parameter in einem speziellen Informations Element (IE) während der PDP-Kontext-Aktivierung an das jeweilige SGSN und GGSN übertragen, wobei der GGSN hierbei für die korrekte Verarbeitung der Parameter verantwortlich ist.

Wird die vom Kunden vorgegebene Zeit oder das vorher definierte Volumen überschritten, wird der PDP Kontext seitens der GGSN beendet oder es wird eine Benachrichtigung über SMS oder MMS (Operator Konfiguration) an das Endgerät des Kunden geschickt, welche den Hinweis enthält, dass das Volumen oder die Zeit in Kürze überschritten ist.

In einer weiteren Ausführungsform der Erfindung ist vorgesehen, dass der Kunde über eine SMS benachrichtigt wird, welche die Information anzeigt, dass der PDP Kontext nach seinen Vorgaben direkt beendet wurde, da das Datenvolumen oder die Übertragungszeit überschritten wurde.

Es ist jedoch durchaus möglich eine andere Meldung zu generieren, kurz bevor das jeweilige Volumen und oder Zeit überschritten ist, damit der Kunde selbsttätig den Dienst oberhalb der Zugangsebene ordnungsgemäß beenden kann.

Im Folgenden wird die Erfindung anhand von einer, lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Dabei zeigt:

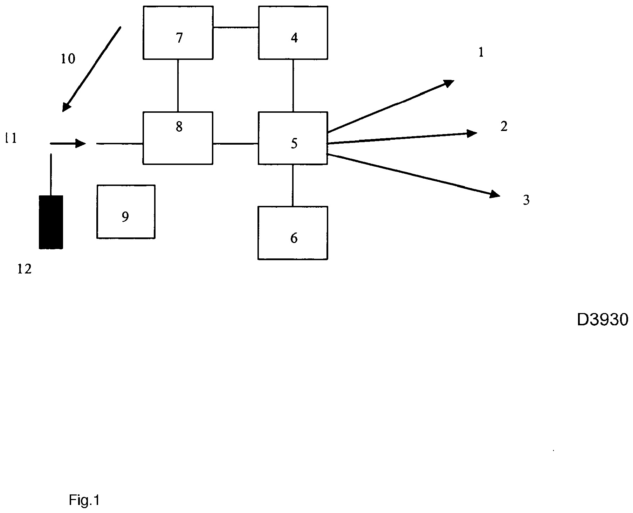

- Figur 1:: eine schematische Darstellung zur Durchführung des Verfahrens zur netzgesteuerten Volumen- und/oder Zeitbegrenzung von GPRS/UMTS basierten Diensten.

In Figur 1 wird in der hier dargestellten Architektur diese um eine Schnittstelle vom GGSN (5) zum SMSC (4) erweitert.

Diese Schnittstelle kann im Fall eines "local access", d. h. der Kunde wird nicht von seinem Heimat GGSN aus bedient, auch in einem Fremdnetz liegen und muss daher standardisiert sein.

Zusätzlich wird die PDP Kontext Aktivierungsmeldung um ein Informations Element (IE) erweitert, welches den vom Kunden erwünschten maximalen Volumen oder Zeitverbrauch und die Informationen über sofortige Beendigung oder Benachrichtigung berücksichtigt.

Hierbei sind die aus dem Stand der Technik bekannten Anpassungen der Spezifikation 23.060 und 04.11. 03.60 sowie nachfolgend aufgeführte Spezifikationen bzw. Funktionen zu berücksichtigen.

Darüber hinaus ist wahlweise auch das MMSC (6) verwendbar, um entsprechende Nachrichten, auch Multimedia angereichert zu versenden, da üblicherweise die Schnittstelle vom MMSC (6) zum GGSN (5) bereits vorhanden ist.
Ansonsten ist eventuell eine spezielle Schnittstelle erforderlich.

Die Funktionen zur Durchführung des erfindungsgemäßen Verfahrens sind folgende:
- Bereitstellung einer Schnittstelle vom GGSN (5) zum SMSC (4).
- Neues Information Element in der PDP Kontext Aktivierungsmeldung (wird die maximale Zeit, das maximale Volumen erreicht, erfolgt eine sofortige Beendigung des PDP Kontextes sowie eine entsprechende Benachrichtigung des Kunden).
- Beendigung des PDP Kontextes (auch sekundäre Kontexte) und aller damit assoziierten Dienste nach Vorgabe der vom Kunden gewünschten maximalen Volumina oder Zeitbegrenzung.
- Benachrichtigung des Kunden über die Beendigung und über den Grund der Beendigung des PDP Kontextes und aller damit verbundenen Dienste.
- Option im Information Element, ob sofortiger Abbruch oder Benachrichtigung erfolgen soll.
- GGSN (5) initiated PDP Context Deactivation Prozedur wird auch für diesen Fall verwendet.
Dies bedeutet, dass ein spezieller Cause aufgesetzt wird, um dem Endgerät den Grund des PDP Kontext Abbaus nach der bekannten Spezifikation TS 23.060 (Anzahl der einzelnen Sitzungen/Verbindungen) mitzuteilen.

Eine Erweiterung durch Berücksichtigung bestimmter Causes ist möglich.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

### Bezugszeichenliste

1. APN Internet
2. APN IMS
3. APN 3^{rd} party service
4. SMSC
5. GGSN
6. MMSC
7. MSC
8. SGSN
9. GPRS / UMTS
10. Pfeilrichtung
11. Pfeilrichtung
12. Endgerät

### Begriffslegende

- GPRS: General Pocket Radio System
- UMTS: Universal Mobile Telecommunication System
- PDP: Pocket Data Protocol
- SMS: Short Message Service
- MMS: Multi Media Service
- SGSN: Serving GPRS Support Node (Stützknotenpunkt)
- GGSN: Gateway GPRS Support Node
- IE: Information Element
- SMSC: Short Message Service Center
- APN: Access Point Name
- ATM: Asynchronus Transfer Module
- IMS: Internet Mail Service
- QoS: Quality of Service (Dienstgüte)

## Patentansprüche

1. Verfahren zur netzgesteuerten Volumen- und Zeitbegrenzung von GPRS/UMTS, 2G/3G, basierten Diensten, wobei eine Anzahl von empfangenen beziehungsweise übermittelten Datenpaketen in einer offenen, beziehungsweise aktiven Telekommunikationsverbindung innerhalb einer vom Netzbetreiber festgelegten Zeitperiode ermittelt wird mittels einer entsprechenden Berechnungsmethode gegenüber einem Telekommunikationskunden abgerechnet werden, wobei eine netzgesteuerte Volumen- und/oder Zeitbegrenzung von Datenpaketen innerhalb von GPRS/UMTS basierten Diensten durchgeführt wird, welche für einen Nutzer der Telekommunikationsverbindung eine Kostenkontrolle der in Anspruch genommenen Telekommunikationsdienste ausbildet, **dadurch gekennzeichnet, dass** eine direkte Eingabe eines minimalen oder maximalen Datenvolumens und/oder Zeitvolumens über ein Endgerät durch den Nutzer der Telekommunikationsverbindung erfolgt und die volumen- und/oder zeitabhängige Kontrolle der übermittelten Datenpakete mittels eines netzinternen PDP-Kontextes ausgeführt ist, wobei die PDP-Kontext-Aktivierungsmeldung um ein Informationselement, IE, erweitert ist, wobei eine akustische Signalisierung, ausgeführt durch einen generierten Signalton, eine generierte Short Message Service, SMS, - oder eine generierte Multimedia Messages Service, MMS, Nachricht und/oder optische Signalisierung bei oder nach Erreichen des vom Nutzer vorgegebenen Minimal- oder Maximalwertes eines Datenvolumens und/oder Zeitfensters durchgeführt wird und/oder dass ein sofortiger Abbruch der Übermittlung von Datenpaketen erfolgt, wenn das vom Nutzer eingegebene Datenvolumen und/oder Zeitfenster erreicht oder überschritten wird, wobei die zum Abbruch der Datenübermittlung erforderlichen Parameter in dem speziellen Informationselement, IE, während der PDP-Kontext-Aktivierung an das jeweilige SGSN (8) und GGSN (5) übertragen werden, wobei der GGSN (5) die Verarbeitung der Parameter durchführt.

2. Verfahren nach Anspruch 1, **dadurch gekennzeichnet, dass** als Endgerät ein Mobilfunkendgerät verwendet wird.

3. Verfahren nach Anspruch 1, **dadurch gekennzeichnet, dass** die Signalisierung des Nutzers mittels des Multimedia Message Services, MMS, über eine vorhandene Schnittstelle vom MMSC (6) zum GGSN (5) ausgeführt ist.

4. Verfahren nach einem der vorhergehenden Ansprüche 1 bis 3, **dadurch gekennzeichnet, dass** eine Schnittstelle vom GGSN (5) zum SMSC (4) bereitgestellt wird.

## Claims

1. Method for network-controlled limitation of the volume and time of services based on GPRS/UMTS 2G/3G, wherein a number of data packets received or transmitted in an open or active telecommunications connection is determined within a period of time set by the network operator and is charged to a telecommunications customer by means of a corresponding method of calculation, wherein a network-controlled limitation of the volume and/or time is carried out on data packets within GPRS/UMTS-based services, forming a cost control for a user of the telecommunications connection for the telecommunications services used, **characterised in that** a minimum or maximum volume of data and/or volume of time is entered directly by the user of the telecommunications connection by means of a terminal device and the control of the transmitted data packets according to the volume and/or time is executed by means of an intra-network PDP context, wherein the message activating the PDP context is augmented by an information element IE, wherein acoustic signalling, executed by a generated signal tone, a generated short message service SMS or a generated multimedia message service MMS message and/or optical signalling is provided on reaching or exceeding the minimum or maximum value predetermined by the user for a volume of data and/or time window, and/or **in that** the transmission of data packets is terminated immediately when the volume of data and/or time window entered by the user is reached or exceeded, wherein the parameters required to terminate the data transmission are transmitted to the respective SGSN (8) and GGSN (5) in the specific information element IE during the activation of the PDP context, wherein the GGSN (5) carries out the processing of the parameters.

2. Method according to claim 1, **characterised in that** a mobile radio terminal device is used as the terminal device.

3. Method according to claim 1, **characterised in that** the signalling for the user is provided by means of the multimedia message service MMS through an existing interface from the MMSC (6) to the GGSN (5).

4. Method according to one of the preceding claims 1 to 3, **characterised in that** an interface is provided from the GGSN (5) to the SMSC (4).

## Revendications

1. Procédé pour la limitation en volume et en temps, commandée par le réseau, de services basés sur les technologies GPRS/UMTS, 2G/3G, un certain nombre de paquets de données reçus ou transmis étant déterminés dans une liaison de télécommunication ouverte ou active, à l'intérieur d'un laps de temps fixé par l'opérateur, et étant facturés à l'aide d'un procédé de calcul correspondant, par rapport à un client de télécommunication, selon lequel est réalisée une limitation en volume et/ou en temps, commandée par le réseau, de paquets de données à l'intérieur de services basés sur les technologies GPRS/UMTS, qui forme pour un utilisateur de la liaison de télécommunication un contrôle de coût des services de télécommunication auxquels il a recours,
**caractérisé en ce qu'**une entrée directe d'un volume de données et/ou de temps minimal ou maximal est réalisée par l'utilisateur de la liaison de télécommunication, par l'intermédiaire d'un terminal, et le contrôle, dépendant du volume et/ou du temps, des paquets de données transmis est réalisé à l'aide d'un contexte PDP interne au réseau, le message d'activation de contexte PDP étant augmenté d'un élément d'information, IE, un signalement acoustique grâce à un signal sonore généré ou à un message généré par le Service de messages courts, SMS, ou par le Service de messages multimédia, MMS, et/ou un signalement optique étant réalisés quand ou une fois que la valeur minimale ou maximale de volume de données et/ou de fenêtre de temps prédéfinie par l'utilisateur est atteinte,
et/ou **en ce qu'**une interruption immédiate de la transmission de paquets de données a lieu quand le volume de données et/ou la fenêtre de temps prédéfinis par l'utilisateur sont atteints ou dépassés, les paramètres nécessaires pour l'interruption de la transmission de données étant transmis dans l'élément d'information, IE, spécial pendant l'activation de contexte PDP au SGSN (8) et GGSN (5) respectif, le GGSN (5) réalisant le traitement des paramètres.

2. Procédé selon la revendication 1, **caractérisé en ce qu'**un terminal de téléphonie mobile est utilisé comme terminal.

3. Procédé selon la revendication 1, **caractérisé en ce que** le signalement pour l'utilisateur est réalisé à l'aide du Service de messages multimédia, MMS, par l'intermédiaire d'une interface existante de MMSC (6) vers le GGSN (5).

4. Procédé selon l'une des revendications 1 à 3 précédentes, **caractérisé en ce qu'**une interface du GGSN (5) vers le SMSC (4) est prévue.
